# EUROPEAN PATENT APPLICATION

(11) **EP 4 353 608 A1**
(43) Date of publication of application: **17.04.2024**
(21) Application number: 23199973.1
(22) Date of filing: 27.09.2023
(51) Int. Cl.: B65B 43/30, B65B 43/42, B65B 43/48, B65B 43/52, B65B 43/56, B65G 47/88

(54) **CONVEYOR FOR CONTAINERS AND PACKAGING MACHINE**

(30) Priority: 12.10.2022 IT 202200021024
(71) Applicant: I.L.P.R.A. S.p.A., 20124 Milano (IT)
(72) Inventor: BERTOCCO, Maurizio, 20124 MILANO (IT)
(74) Representative: Tarabbia, Luigi

(57) **Abstract**

A conveyor (100) for containers (C) comprises a loading surface (110) designed to receive containers and defining a forward path (P) as well as handling means (120) configured to engage and move each container along the forward path; the conveyor further comprises interference means (130) alternating with the handling means (120), wherein each interference means is arranged at a predetermined distance from a respective handling means and is movable along the forward path so as to maintain the predetermined distance (D), defining a motion limiting pair of the container; each motion limiting pair is configured to hold a respective container within a space defined by the limiting pair itself.

## Description

The present invention relates to a conveyor for containers and a product packaging machine comprising such a conveyor for containers.

The term "container" is intended to mean any type of vessel suitable for packaging a product. Preferably, the term "container" is intended to mean a tray defining a containment volume that is open at the top and suitable for packaging foodstuffs.

As is known in the field pertaining to the present invention, container packaging machines comprise a conveyor for containers which is configured to convey a plurality of empty containers through a feeding station, in which a product is loaded inside the containers, and a subsequent packaging station, in which the containers are closed, typically in a gas-tight manner.

Structurally, conveyor lines typically comprise a loading surface designed to receive and support the plurality of containers and defining the above-mentioned forward path. Conveyor lines are also equipped with handling means comprising a handling belt or chain adjacent to the loading surface and configured to move a plurality of pusher elements along the forward path. Each pusher is therefore configured to engage a rear portion of the container so as to move it along the handling path through the above-mentioned stations.

The Applicant noted that, even in their most modern implementations, machines for this type of packaging have some structural, operational, and economic/productive disadvantages which make their use not without drawbacks.

In particular, the above conveyor, as structured, does not allow optimal performance in terms of volumes of conveyed containers and/or in terms of process reliability.

In detail, the handling means can operate at a limited operating speed due to the actual risk that, once too much inertia has accumulated, the containers may separate from the respective pusher elements, especially during the braking of the handling means, or in the vicinity of the feeding and packaging stations. In fact, incorrect positioning of the containers in the vicinity of the feeding and/or packaging stations would lead to errors in the procedure and a large number of discarded pieces.

In this context, the technical task underlying the present invention is to provide a conveyor for containers as well as a product packaging machine, which overcome the above-mentioned drawbacks of the prior art.

In particular, one object of the present invention is to provide a conveyor for containers as well as a product packaging machine, which allow high process reliability and, at the same time, a significant increase in productivity.

A further object of the present invention is to provide a conveyor for containers as well as a product packaging machine, which do not overcomplicate the structure and which allow high operational versatility.

The specified technical task and object are substantially achieved by means of a conveyor for containers as well as a product packaging machine comprising the technical features set forth in claims 1 and 9 and/or in one or more of the claims dependent thereon, respectively.

Further features and advantages of the present invention will become more apparent from the indicative, and therefore non-limiting description of a preferred, but not exclusive, embodiment of a conveyor for containers and a product packaging machine, as illustrated in the accompanying drawings wherein:
- Figure 1 is a perspective view of an exemplary and therefore non-limiting embodiment of a product packaging machine in accordance with the present invention;
- Figure 2 is a schematic, perspective view of the machine in Figure 1 shown in such a way as to show further components;
- Figure 3 shows a perspective view of a detail of the machine in Figures 1 and 2.

With reference to the attached figures, the reference numeral 1 indicates a machine for packaging a product using a container "C".

In accordance with the attached figures, the machine 1 comprises an (auxiliary) pre-loading station 20 for the pre-loading of a plurality of empty containers "C".

The term "container" is intended to mean any type of vessel suitable for packaging a product. Preferably, the term "container" is intended to mean a tray defining a containment volume that is open at the top and suitable for packaging foodstuffs. Even more preferably, the term "container" is intended to mean a tray in accordance with the above and having a square or rectangular base.

Preferably, the container "C" pre-loading station 20 comprises a conveyor belt 21 designed to receive and support a plurality of containers "C" in succession, so as to convey the containers "C" in single or multiple rows along a forward path "P" for the forward movement of the containers "C". Functionally, the conveyor belt 21 can be fed with empty containers "C" directly by an operator.

Downstream of the pre-loading station 20, the machine 1 comprises a conveyor 100 for containers "C".

Functionally, the conveyor 100 receives the plurality of empty containers "C" from the pre-loading station 20. Alternatively, an operator may directly load the empty containers "C" onto the conveyor 100.

The conveyor 100 is configured to intermittently convey the plurality of containers "C" along the forward path "P", which may optionally also comprise a feeding station 30 for feeding the above product, and a packaging station 40.

The (optional) feeding station 30 is arranged along the forward path "P" and comprises a product feeding unit 31 configured to deposit a portion of product into each container "C". Functionally, the container "C" is positioned underneath the feeding unit 30 so that the portion of product can be deposited inside the container "C".

The containers "C" are then moved towards the packaging station 40 by the conveyor 100. The packaging station 40 is arranged downstream of the feeding station 30 and comprises a packaging unit 30 (40) configured to close the containers "C" in a gas-tight manner.

Preferably, the packaging unit 40 is a heat-sealing machine configured to seal the container "C" with a film in a gas-tight manner.

Once the containers "C" have been closed, they are moved towards the output of the machine 1. For this purpose, downstream of the conveyor 100, the machine 1 may comprise an (auxiliary) pick-up station 50.

As can be seen in the figures, this pick-up station 50 comprises an inclined surface. Alternatively, the pick-up station 50 comprises an inclined surface equipped with an idle roller conveyor. Alternatively, the pick-up station 51 may comprise a conveyor belt or equivalent technology.

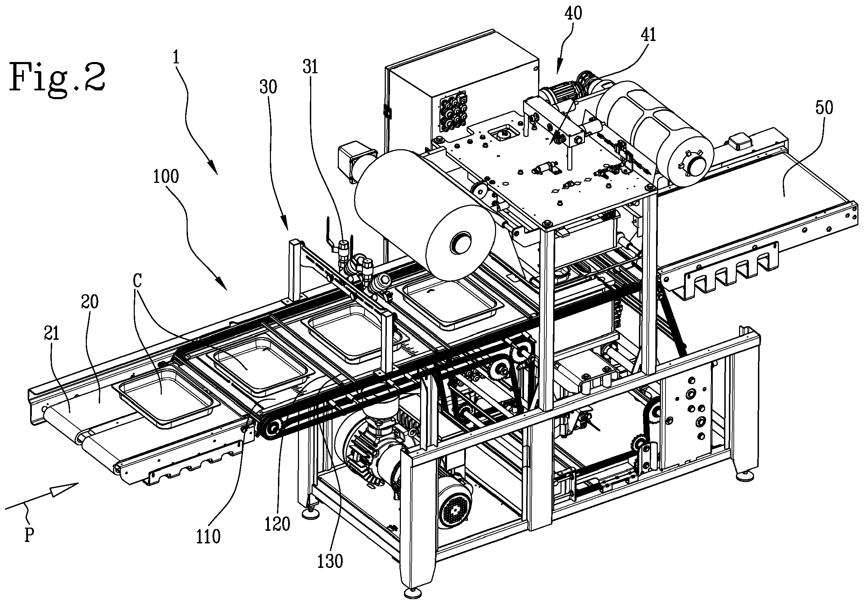

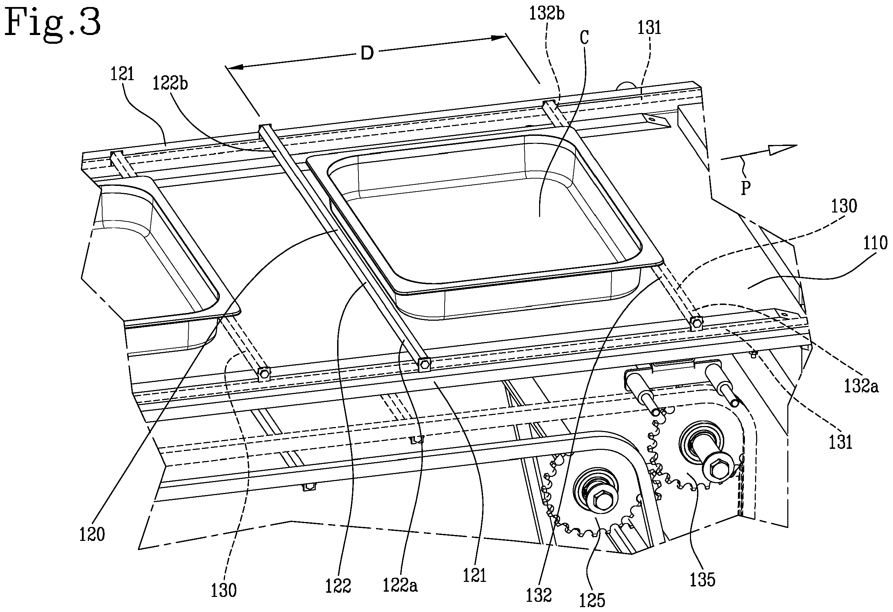

With reference to Figures 2 and 3, the conveyor 100 comprises a loading surface 101 designed to receive and support a plurality of containers "C" in succession. In detail, the loading surface 110 defines, at least partially, the aforementioned forward path "P" for the containers "C". Preferably, the forward path "P" is linear.

Structurally, the loading surface 110 is defined by a flat surface, made of metal or plastic material.

According to an example, not shown, the loading surface 110 is equipped with an idle roller conveyor so as to decrease the friction between the container "C" and the loading surface 110 itself. The containers "C" are moved along the forward path "P" by handling means 120.

The handling means 120 are configured to engage each container "C" and move it along the forward path "P". In other words, the handling means 120 engage the containers "C" arriving on the loading surface 110 and carry them along the forward path "P".

In accordance with one aspect of the invention, with reference to Figures 2 and 3, the conveyor 100 comprises interference means 130 alternating with the handling means 120.

In detail, each interference means 120 is arranged at a predetermined distance "D" from a respective handling means 110 and is movable along the forward path "P" so as to maintain the predetermined distance "D", defining a pair limiting the motion of the container "C". In particular, each motion limiting pair is configured to hold a respective container "C" within a space defined by the limiting pair itself.

In other words, each handling means 120 is associated with a respective interference means 130, thus forming the aforementioned limiting pair. In use, each container "C" is interposed between a handling means 120, which is arranged behind the container "C", and an interference means 130, which is arranged in front of the container "C".

In the present description, the terms "behind/rear" and "front/in front" refer to the direction of movement of the handling means 120 and interference means 130 and therefore refer concomitantly to the direction of movement of the containers "C" along the forward path "P".

Furthermore, the limiting pair is movable in an integral or concordant manner along the forward path "P" so that the above predetermined distance "D" remains unchanged. In particular, the predetermined distance "D" substantially corresponds to the longitudinal dimension of the container "C" in relation to the forward direction "P" of the containers "C", as will be explained in greater detail hereinafter.

Advantageously, this feature ensures that the container "C" remains close to, and preferably adherent to, the handling means 120 during all phases of transport on the conveyor 100. This results in the container "C" remaining in the aforementioned defined space even during the braking phases of the handling means 120, thereby allowing the product feeding unit 31 and the packaging unit 41 to operate in an optimal and precise manner.

In accordance with one aspect of the present invention, the handling means 120 and the interference means 130 are decoupled and movable independently of one another.

In particular, the predetermined distance can be modified and set according to the longitudinal extension of the containers "C" in relation to the forward path "P".

Advantageously, these technical features make the conveyor 100 highly efficient, versatile, and adaptable to various operating configurations.

In accordance with one aspect of the present invention, the conveyor 100 comprises a programmable logic controller (PLC), not shown, connected to the handling means 120 and the interference means 130 and configured to cause a coordinated operation of the handling means 120 and the interference means 130. Advantageously, the programmable logic controller allows optimal interpolation of the axes of the handling means 120 and the interference means 130.

Figure 3 illustrates by way of non-limiting example an embodiment of the conveyor 100 in accordance with the present invention, particularly detailing the handling means 120 and the interference means 130. For greater explanatory clarity, the handling means 120 are shown with the solid line, whereas the interference means 130 are shown with the broken line.

In accordance with this embodiment, the handling means 120 comprise a respective handling belt or chain 121, adjacent to the loading surface 110, and a plurality of pusher elements 122, bound to the handling belt or chain 121 and configured to be moved along the forward path "P". In use, each pusher element 122 engages a rear portion of a respective container "C" so as to move it on the loading surface 110 along the forward path "P".

Preferably, the pusher elements 122 have a rod-like shape and are arranged transversely to the forward path "P".

Preferably, the handling means 120 comprise a pair of handling belts or chains 121 which are mutually integral and each arranged on opposite sides of the loading surface 110: each pusher element 122 has a first end 122a attached to a first handling belt or chain 121 of the pair and a second end 122b, opposite the first end 122a, attached to a second handling belt or chain 121 of the pair.

The interference means 130 comprise a respective handling belt or chain 131, adjacent to the loading surface 110, and a plurality of interference elements 132, bound to the handling belt or chain 131 and configured to be moved along the forward path "P" at the same speed as the plurality of pusher elements 122.

In particular, the plurality of interference elements 132 is alternated with the plurality of pusher elements 122 so as to define the aforementioned limiting pairs for a respective container "C".

In use, each pusher element 122 is arranged at the aforesaid predetermined distance "D" from the respective interference element 132 so that the interference element 132 abuts against a front portion of the container "C" and/or results in a stop to the movement of the container "C" when it moves away from the respective pusher element 122.

In other words, the interference elements 132 can be configured to operate in contact with the container "C" so as to keep it adhered to the respective pusher element 122. In this operating methodology, the predetermined distance "D" between the pusher element 122 and the respective interference element 132 substantially coincides with the longitudinal dimension of the container "C".

Alternatively, in use, the interference elements 132 are spaced by a certain clearance from the container "C" so that, especially during the braking phases of the handling means 120 (and therefore of the interference means 130), the interference element 132 serves as a stop to the movement of the container "C" when it moves away from the pusher element 122. This clearance is between 2 mm and 4 mm and, for example, can conveniently be between 0 mm and 2 mm. In this operating methodology, the predetermined distance "D" between the pusher element 122 and the respective interference element 132 is naturally greater than the longitudinal dimension of the container "C".

Preferably, the interference elements 132 have a rod-like shape and are arranged transversely to the forward path "P".

Even more preferably, the interference elements 132 have a shape that is substantially identical to the pusher elements 122.

Preferably, the interference means 130 comprise a pair of handling belts or chains 131 which are mutually integral and each arranged on opposite sides of the loading surface 110 adjacent to the pair of handling belts or chains 121 of the handling means 120; each interference element 132 has a first end 132a attached to a first handling belt or chain 131 of the pair and a second end 132b, opposite the first end 132a, attached to a second handling belt or chain 131 of the pair.

Preferably, the handling means 120 and the interference means 130 have a substantially identical structure.

Advantageously, the handling means 120 and the interference means 130 have a simple structure while ensuring tremendous flexibility and operational versatility to the machine 1. Advantageously, the handling means 120 and the interference means 130 guarantee the possibility to simultaneously move several containers "C", side by side along the forward path "P".

In accordance with one aspect of the present invention, the handling means 120 and/or the interference means 130 comprise a respective brushless DC electric motor 125, 135. Advantageously, this technical feature provides the machine 1 with further versatility and reliability.

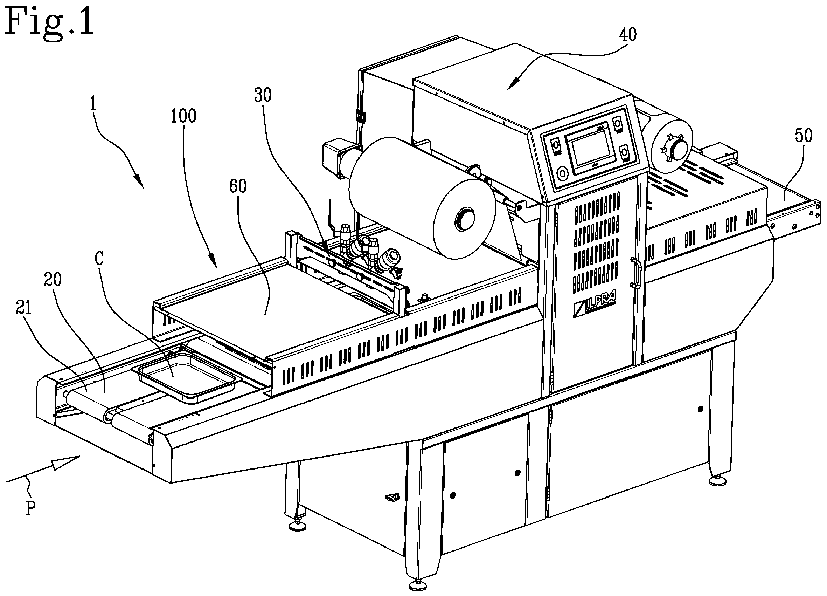

In accordance with one aspect of the present invention, the conveyor 100 comprises a casing 60 for covering the loading surface 110, which can be seen in Figure 1. Advantageously, this technical feature guarantees safety for operators.

The present invention achieves the intended objects while eliminating the drawbacks highlighted by the prior art: in this regard, it should be noted first of all that the machine 1 as described and/or claimed herein allows effective packaging of the product and, at the same time, guarantees a simple and performing structure. In particular, the machine 1 as described and/or claimed herein allows considerable operational versatility and also allows the operating costs of the machine 1 itself to be reduced. These results are achieved especially due to the structure of the conveyor 100, which allows high speed operation, thus ensuring high productivity and, at the same time, high precision. Moreover, advantageously, since the handling means 120 are decoupled from the interference means 130, it is possible to adjust the conveyor 100 so as to be able to handle containers "C" having a very wide dimensional range.

## Claims

1. A conveyor (100) for containers (C), comprising:
- a loading surface (110) designed to receive and support a plurality of containers (C) in succession; said loading surface (110) defining a forward path (P) for these containers (C);
- handling means (120) configured to engage each container (C) of said plurality and move it along said forward path (P); and
interference means (130) alternating with said handling means (120), each interference means (130) being arranged at a predetermined distance (D) from a respective handling means (120), being movable along said forward path (P) so as to maintain said predetermined distance (D) and defining a motion limiting pair of said container (C), each motion limiting pair being configured to hold a respective container (C) within a space defined by the limiting pair itself,
**characterised in that:**
- said handling means (120) and said interference means (130) are decoupled and movable independently of one another;
- the handling means (120) comprise a respective handling belt or chain (121), adjacent to said loading surface (110), and a plurality of pusher elements (122) bound to said handling belt or chain (121) and configured to be moved along said forward path (P); in use, each pusher element (122) engaging a rear portion of a respective container (C) so as to move it on said loading surface (110) along said forward path (P); and
- the interference means (130) comprise a respective handling belt or chain (131), adjacent to said loading surface (110), and a plurality of interference elements (132), bound to said handling belt or chain (131) and configured to be moved along said forward path (P) at the same speed as said plurality of pusher elements (122); said plurality of interference elements (132) alternating with said plurality of pusher elements (122) so as to define said motion limiting pairs for a respective container (C); and wherein
in use, each pusher element (122) being arranged at said predetermined distance (D) from the respective interference element (132) so that said interference element (132) abuts against a front portion of said container (C) and/or results in a stop to the movement of said container (C) when it moves away from the respective pusher element (122).

2. The conveyor (100) according to claim 1, wherein said predetermined distance (D) can be modified and set according to the longitudinal extension of said containers (C) in relation to said forward path (P).

3. The conveyor (100) according to any one of the preceding claims, comprising a programmable logic controller (PLC) connected to said handling means (120) and interference means (130) and configured to cause a coordinated operation of said handling means (120) and said interference means (130).

4. The conveyor (100) according to any one of the preceding claims, wherein said pusher elements (122) and said interference elements (132) have a rod-shaped conformation and are arranged transversely to said forward path (P).

5. The conveyor (100) according to claim 4, wherein said handling means (120) comprise a pair of handling belts or chains (121) which are mutually integral and each arranged on opposite sides of said loading surface (110); each pusher element (122) having a first end (122a) attached to a first handling belt or chain (121) of said pair and a second end (122b), opposite the first end (122a), attached to a second handling belt or chain (121) of the pair; and/or
wherein said interference means (130) comprise a pair of handling belts or chains (131) which are mutually integral and each arranged on opposite sides of said loading surface (110) adjacent to said pair of handling belts or chains (121) of the handling means (120); each interference element (132) having a first end (132a) attached to a first handling belt or chain (131) of said pair and a second end (132b), opposite the first end (132a), attached to a second handling belt or chain (131) of the pair.

6. The conveyor (100) according to any one of the preceding claims, wherein said handling means (120) and/or said interference means (130) comprise a respective brushless DC electric motor (125, 135).

7. The conveyor (100) according to any one of the preceding claims, comprising a casing (60) for covering said loading surface.

8. A machine (1) for the packaging of a product, comprising:
- a conveyor (100) according to any one of the preceding claims, configured to receive and support a plurality of empty containers (C) and move them along said forward path (P); and
- a packaging station (40) arranged along said forward path (P) and comprising a packaging unit (41) configured to gas-tight seal said plurality of containers (C) containing said product,
said machine preferably also comprising a feeding station (30) arranged along said forward path (P) and comprising a feeding unit (31) for a product, said feeding unit (31) being configured to deposit a portion of the product in each of said plurality of empty containers (C), said packaging station (40) even more preferably being arranged downstream of said feeding station (30) along the forward path (P).
